# EUROPÄISCHE PATENTSCHRIFT

(11) **EP 1 296 412 B1**
(45) Veröffentlichungstag und Bekanntmachung des Hinweises auf die Patenterteilung: **27.09.2006**
(21) Anmeldenummer: 02014501.7
(22) Anmeldetag: 29.06.2002
(51) Int. Cl.: G01S 13/93, H01Q 25/00

(54) **Einparkhilfsvorrichtung für Kraftfahrzeuge**
Parking aid device for motor vehicles
Dispositif d'aide de parcage pour des véhicules automobiles

(30) Priorität: 21.09.2001 DE 10146712
(43) Veröffentlichungstag der Anmeldung: 26.03.2003
(73) Patentinhaber: Bayerische Motoren Werke Aktiengesellschaft, 80809 München (DE)
(72) Erfinder: Gensler, Frank, 85579 Neubiberg (DE); Maier, Dietmar, 84095 Furth b. Landshut (DE)

(56) Entgegenhaltungen:
- EP-A- 0 305 907
- EP-A- 1 068 992
- DE-U- 20 105 340
- US-B1- 6 265 968

## Beschreibung

Die Erfindung bezieht sich auf eine Einparkhilfsvorrichtung für Kraftfahrzeuge mit den im Oberbegriff des Patentanspruchs 1 angegeben Merkmalen.

Verschiedene bekannte Einparkhilfsvorrichtungen sehen zur Vermessung von Parklücken mindestens einen an der dem Bordstein zugewandten Fahrzeugseite montierten Abstandssensor vor, welcher senkrecht zur Fahrtrichtung beim Vorbeifahren die Länge (vgl. DE 37 28 948 A und EP 305 907 A1) und optional bei tiefenbegrenzten Parklücken (z. B. durch Bordstein) auch deren Tiefe ermittelt. Als Abstandssensoren dienen dabei Ultraschall- oder Radar-Abstandsmesssysteme (z. B. 24 GHz-Systeme) mit konischen Strahlenkeulen. Aus Gründen der Antennen-Querschnittsfläche finden bei den Radarsystemen Öffnungswinkel von ca. 60 DEG Anwendung, bei den kostengünstigeren Ultraschallsystemen kommen auch kleinere Winkel in Betracht. Unter Abstandssensor ist dabei eine Sender-/Empfängereinrichtung mit nachgeschalteter Auswerteelektronik zu verstehen.

Im Gegensatz zu Licht arbeiten die beschriebenen Abstandssensoren mit relativ großen Wellenlängen (z. B. 12,5mm@24GHz und 8,6mm@40kHz US). Damit reflektieren bestrahlte Objekte, welche ein Rauigkeitsmass unterhalb dieser Wellenlänge aufweisen, wie ideale Spiegel.

Da die Sensoren nur Abstands-, nicht aber Richtungsinformation liefern, müssen im Strahlkegel erfasste Objekte auf die Strahlachse positioniert werden. Die Abschätzung der Richtung mittels Triangulation bei Verwendung zweier oder mehrerer Sensoren gelingt aber nur dann, falls genau dieselbe Objektstelle vermessen wird. Dies geht aber mit spiegelartig reflektierenden Objekten prinzipiell nicht, da hier nur senkrecht auftreffende Strahlung in den Empfänger zurückreflektiert wird.

Die Parklückenvermessung beinhaltet zwei grundsätzliche Probleme: Erstens beeinflusst die geometrische Form der Parklückenbegrenzungen (kastenförmig oder abgerundet) die Längsvermessung, zweitens kommt die Ununterscheidbarkeit zwischen relevanten erhabenen (z. B. Pfosten oder Fahrzeuge) und nichtrelevanten fahrbahnbezogenen Objekten (Steinchen, Rasensteine) hinzu. Eine Differenzierung zwischen diesen Objektklassen gelingt auch nicht durch Triangulation horizontal nebeneinander angeordneter Sensoren.

Die Erfassung der Parklückentiefe (Bordsteindetektion) bedingt relativ große Öffnungswinkel der Sensorkeule(n). Damit wird für die Längsvermessung die Positions- bzw. Richtungsgenauigkeit aber reduziert. Bei verrundeten Parklückenbegrenzungen wird die Stirnseite der hinteren Begrenzung in Rückwärtssicht noch gesehen, wenn die Achse der Sensorkeule sie schon hinter sich gelassen hat, die Rückseite der vorderen Begrenzung wird in Vorausschau schon detektiert, bevor die Achse der Sensorkeule auf ihrer Höhe ist. Dies führt dazu, dass die gemessene Lückenlänge geringer ausfällt als sie ist, mit um so gravierenderem Ausmass, je breiter die Sender-Strahlenkeule gewählt wird.

In diesem Zusammenhang ist es aus der DE 201 05 340 U1 bekannt, bei Überfahren einer Parklücke mit mehreren nacheinander erzeugter 2-dimensionaler Lichtfächer die Parklücke auszumessen und unter Berücksichtigung des zurückgelegten Weges ein 3-dimensionales Abbild der Parklücke zu reproduzieren.

Ferner ergibt sich aus der US 6 265 968 B1 eine Einrichtung, mit der eine Parklücke optisch gescannt werden kann. Durch entsprechende Signalauswertung soll dabei zwischen die Parklücke begrenzenden, stehenden, und vorbeifahrenden Objekten unterschieden werden können.

Schließlich zeigt die EP 1 068 992 A2 eine Einparkhilfsvorrichtung für Kraftfahrzeuge, bei der ein an der Fahrzeugrückseite angeordneter Sender das hinter dem Fahrzeug befindliche Objekt horizontal und vertikal abrastert. Das Ergebnis wird auf einem Bildschirm dargestellt.

Der Erfindung liegt die Aufgabe zugrunde, eine Einparkhilfsvorrichtung der eingangs genannten Art zu schaffen, die mit geringem Aufwand eine zuverlässige Aussage über die tatsächliche Form einer Parklücke ermöglicht.

Die Erfindung löst diese Aufgabe mit den Merkmalen des Patentanspruchs 1.

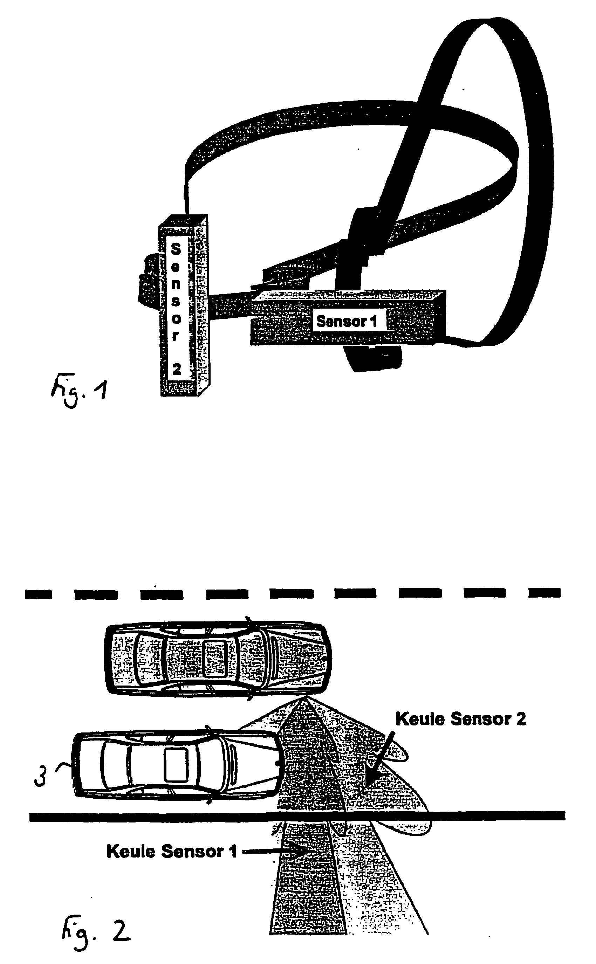

Eine benachbarte, vorzugsweise in einem gemeinsamen Gehäuse an einem vorderen Eckpunkt des Kraftfahrzeugs sitzende Anordnung zweier Abstands-Sensoren 1 und 2, die zwei Sendesignale unterschiedlicher Strahlengeometrie liefern und zusammen eine "Kreuzkeule" erzeugen, kann die beiden genannten Grundprobleme deutlich abmindern. Aus Kostengründen kommen dabei vorzugsweise Ultraschallsensoren in Betracht, das Prinzip gilt analog natürlich aber auch für Radarsensoren. Die Anordnung ist anhand von Figur 1 veranschaulicht.

Der Sensor 1 besitzt in horizontaler Richtung eine schmale (ca. 10° - 20°), in vertikaler Richtung eine breite (ca. 30° - 60°) Strahlkeule 1'. Näherungsweise kann die Strahlkeule als Fläche angenähert werden, deren Normalen horizontal in Fahrtrichtung verläuft. Der Sensor 2 weist dieselbe geometrische Konfiguration auf, jedoch um 90° verdreht (Strahlkeule 2'). Die Achsen beider Sensoren zeigen horizontal parallel rechtwinklig zur Fahrtrichtung. Die Flächennormalen der beiden Sensoren stehen senkrecht aufeinander. Anstelle der dargestellten Ausführung können die Flächennormalen auch um jeweils 45° gegen die Fahrtrichtung geneigt sein

Die vertikale Ausrichtung der Mittelachsen der Strahlkeulen 1' und 2' ist abhängig von der Einbauhöhe der Sensoren 1 und 2 und wird idealer Weise so gewählt, dass die Keule 2' die Fahrbahnoberfläche erst in größerer Entfernung vom Fahrzeug mit merklicher Intensität triff. Im Gegensatz zu den o.g. bekannten Systemen mit konischer Strahlkeule ergibt sich dadurch der Vorteil, Bodenechos z.B. durch Schotter, Gullis oder andere fahrbahnbezogenen Objekte nicht auftreten zu lassen. Die Strahlkeule 2' sieht über diese Objekte hinweg und detektiert erst Objekte, die einen größeren Abstand vom Fahrzeug besitzen. Je nach Einbauhöhe ist es damit möglich, einen Bordstein nicht oder erst ab einer bestimmten Höhe zu detektieren.

Die in vertikaler Richtung ausgedehnte Strahlenkeule 1' trifft schon in kurzem Abstand vom Sensor mit merklicher Intensität auf die Fahrbahnfläche. So können z.B. sich dort befindliche Steinchen als vom Sensor 1 detektierte Objekte bemerkbar machen. Die Abstandswerte dieser Objekte schwanken i.a. je nach Verteilung der Objekte auf dem Boden, wogegen Bordsteine über längere Vorbeifahrstrecken des Fahrzeuges hinweg zu gleichmäßigen Abstandswerten führen. Sofern also der Sensor 1 abstandsmäßig fluktuierende Objekte ermittelt, der Sensor 2, welcher über diese Objekte hinwegsieht, keine Objektinformation oder gleichmäßige Abstandsinformation in größerer Entfernung ermittelt, kann davon ausgegangen werden, dass die Parklücke zum Einparken zugänglich ist.

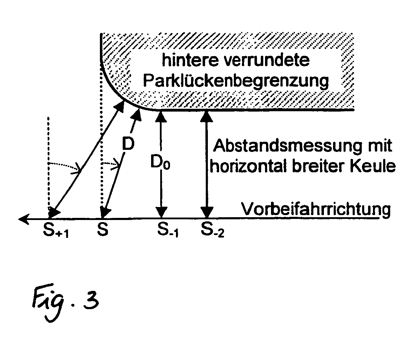

Durch den Vergleich der entfernungsabhängigen Rückstreuamplituden beider Sensoren 1 und 2 während der Vorbeifahrt an einem Hindernis bzw. wie in Fig. 2 dargestellt einem abgestellten Fahrzeug 3 kann ferner die Formgestalt der Parklückenbegrenzungen (eckig bzw. abgerundet) bestimmt werden.
Anhand von Figur 3 ist die Arbeitsweise der erfindungsgemäßen Vorrichtung weiter erläutert.

Es seien kastenförmige hintere Parklückenbegrenzungen angenommen. Bei der Vorbeifahrt an ihnen liefert der Sensor 1 nahezu dieselbe Objektinformation wie der Sensor 2, da der in Reflexionsrichtung bestrahlte Flächenbereich der Seitenfläche der Parklückenbegrenzungen sich für die beiden Sensoren so gut wie nicht unterscheidet. Nach Passieren der Vorderseite befinden sich für beide Sensoren dann praktisch keine Flächenelemente mehr in Reflexionsrichtung, die Intensität der Abstandssignale fällt bei beiden Sensoren abrupt ab.

Ist die Vorderseite der hinteren Parklückenbegrenzung aber abgerundet, fällt nach dem Passieren ihrer Stirnfläche die Rückstreuintensität des Sensors 1 wegen der in horizontaler Richtung stärkeren Bündelung wesentlich schneller ab als die des Sensors 2, der mit seiner horizontal breiten Keule die Verrundung in Rückschau noch länger detektiert.

Bei S beginnt die Parklücke. Die dort gemessene Entfernung D ist wegen der Rückschau schon größer als D0. Der Sensor 1 mit horizontal schmaler Keule findet je nach der geometrischen Formgestalt dort schon keine Flächenanteile in Reflexionsstellung mehr vor, zugleich steigt aber das Bodensignal (Clutter) aus Entfernungen > D0 deutlich an. Die wegabhängige Entwicklung dieses Bodensignals bietet damit eine Korrekturmöglichkeit zu der Bestimmung des Endes der Parklückenbegrenzung.

Entsprechendes gilt für die Erfassung der Rückseite der vorderen Parklückenbegrenzung.

Eine Vermeidung gegenseitiger Beeinflussung beider Sensoren kann durch Wahl leicht unterschiedlicher Betriebsfrequenzen, alternierender Betriebsart oder geeigneter Modulationsverfahren gewährleistet werden.

Durch eine Kombination zweier billiger Sensoren 1 und 2 wird ein Funktionsumfang erzielt, der alternativ nur mit bedeutend aufwendigerer und teurerer Sensorik (Multibeam- oder Scanner-Systeme) zu erzielen ist. Die Messgenauigkeit für die Parklückenlänge wird wesentlich weniger durch unterschiedliche geometrische Parklücken-Begrenzungsformen beeinflusst.

Damit steigt der Nutzungsgrad von auf dieser Vermessung aufbauenden Fahrer-Assistenzsysteme, mit deren Hilfe beispielsweise der Parkiervorgang unterstützt bzw. selbsttätig durchgeführt wird.

## Patentansprüche

1. Einparkhilfsvorrichtung für Kraftfahrzeuge mit mindestens einem an der Fahrzeugaußenseite angeordneten Sender (Sensoren 1 und 2) für ein zumindest annähernd senkrecht zur Fahrzeuglängsachse abgestrahltes, auf einen kleinen Ausstrahlwinkelbereich beschränktes Sendesignal und einen zugeordneten Empfänger für das Reflexsignal, **dadurch gekennzeichnet, dass** das Sendesignal aus zwei Teilstrahlen (Strahlkeulen 1' und 2') gebildet ist, die eine annähernd flächenförmige Abstrahlcharakteristik besitzen, wobei die beiden Flächen zumindest annähernd senkrecht zueinander stehen.

2. Vorrichtung nach Anspruch 1, **dadurch gekennzeichnet, dass** eine der Flächennormalen horizontal und die andere vertikal orientiert ist.

3. Vorrichtung nach Anspruch 1 oder 2, **dadurch gekennzeichnet, dass** die beiden Teilstrahlen in Sendern erzeugt sind, die sich in einem gemeinsamen Gehäuse befinden.

4. Vorrichtung nach einem der Ansprüche 1 bis 3, **dadurch gekennzeichnet, dass** der/die Sender an einem vorderen Eckpunkt des Kraftfahrzeugs sitzt/sitzen.

## Claims

1. A parking aid for motor vehicles comprising at least one sensor (sensors 1 and 2) disposed on the outside of the vehicle for sensing a signal transmitted at least approximately at right angles to the longitudinal axis of the vehicle and restricted to a small beam spread, together with an associated receiver for the reflected signal, **characterised in that** the transmitted signal is made up of two part-beams (lobes 1' and 2') which have an approximately two-dimensional radiation characteristic, the two surfaces being at least approximately at right angles to one another.

2. A device according to claim 1, **characterised in that** one of the normals to the surfaces is horizontal and the other is vertical.

3. A device according to claim 1 or 2, **characterised in that** the two part-beams are generated in transmitters in a common casing.

4. A device according to any of claims 1 to 3, **characterised in that** the transmitter or transmitters are disposed on a front corner of the vehicle.

## Revendications

1. Dispositif d'aide de parcage pour des véhicules automobiles comportant au moins un émetteur (capteurs 1 et 2) installé sur le côté extérieur du véhicule pour émettre un signal d'émission limité à une petite plage d'angle de rayonnement, au moins sensiblement perpendiculaire à l'axe longitudinal du véhicule ainsi qu'un récepteur associé pour le signal réfléchi,
**caractérisé en ce que**
le signal d'émission se compose de deux faisceaux partiels (lobes d'émission 1' et 2') qui ont des caractéristiques de rayonnement en forme de surfaces et les deux surfaces sont au moins sensiblement perpendiculaires l'une à l'autre.

2. Dispositif selon la revendication 1,
**caractérisé en ce que**
l'une des normales à la surface est horizontale et l'autre est orientée verticalement.

3. Dispositif selon la revendication 1 ou 2,
**caractérisé en ce que**
les deux faisceaux partiels sont générés par des émetteurs logés dans un boîtier commun.

4. Dispositif selon la revendication 1 à 3,
**caractérisé en ce que**
le/les émetteur(s) se trouve(nt) à un coin avant du véhicule.
